# EUROPÄISCHE PATENTSCHRIFT

(11) **EP 1 034 949 B1**
(45) Veröffentlichungstag und Bekanntmachung des Hinweises auf die Patenterteilung: **14.05.2003**
(21) Anmeldenummer: 99125460.8
(22) Anmeldetag: 21.12.1999
(51) Int. Cl.: B60G 7/00

(54) **Führungslenker für eine Kraftfahrzeugradaufhängung**
Suspension arm for a motor vehicle wheel suspension
Bras de suspension pour une suspension de roue d'un véhicule automobile

(30) Priorität: 12.03.1999 DE 19911021
(43) Veröffentlichungstag der Anmeldung: 13.09.2000
(73) Patentinhaber: DaimlerChrysler AG, 70567 Stuttgart (DE)
(72) Erfinder: König, Werner, 70329 Stuttgart (DE)

(56) Entgegenhaltungen:
- EP-A- 0 244 806
- DE-C- 758 202
- US-A- 2 122 476
- US-A- 2 913 251
- US-A- 3 006 627
- US-A- 5 515 246
- PATENT ABSTRACTS OF JAPAN vol. 016, no. 242 (M-1259), 3. Juni 1992 (1992-06-03) & JP 04 054334 A (BRIDGESTONE CORP), 21. Februar 1992 (1992-02-21)

## Beschreibung

Die Erfindung betrifft einen Führungslenker für Radaufhängungen von Kraftfahrzeugen, mit einem mindestens zweiteiligen Lenkerkörper, wobei der Lenkerkörper zwei längliche Tragprofile umfaßt, die über mindestens zwei Drittel ihrer Länge voneinander beabstandet parallel zueinander liegen und sich mindestens in der Umgebung einer Lagerbohrung des Lenkerkörpers kontaktieren.

Ein derartiger Führungslenker ist aus der DE 29 52 176 C2 bekannt. Dort wird ein Führungslenker beschrieben, der aus zwei länglichen, schalenförmig ausgebildeten und fest miteinander verbundenen Blechformteilen besteht. Die Blechformteile haben an ihren Enden Öffnungen, die durch an- bzw. umgeformte Ringkragen verstärkt sind. Die Ringkragen sind so dimensioniert, daß sie beim Zusammensetzen der beiden Blechformteile ineinandergreifen und durch Kraftschluß halten. Dieser Führungslenker ist speziell für kleine Radbelastungen geeignet. Hinsichtlich des Einbauaufwandes bei der Montage in das Fahrzeug bietet er gegenüber den herkömmlichen, einteiligen Lenkern keine Vorteile.

Ferner ist aus der gattungsbildenden DE 39 21 468 C1 ein geblechter Lenker bekannt. Der Lenker besteht aus zwei identischen, spiegelbildlich anzuordnenden Preßformteilen und einem diese Teile verbindenden Lagerelement. Die sich gegenüber liegenden Preßformteile haben an einem Ende jeweils einen Ringkragen, in deren beiden Innenbohrungen ein Lagerelement eingepreßt ist. Auch dieser Lenker ist speziell nur für kleine Radbelastungen geeignet. Das zeigt sich u.a. darin, daß das Lagerelement im Lenker keine eindeutige axiale Fixierung aufweist.

Der vorliegenden Erfindung liegt die Problemstellung zugrunde, einen Führungslenker zu entwickeln, der sich durch eine einfache Konstruktion, einen geringen Fertigungsaufwand und eine unkomplizierte Montage auszeichnet. Ferner soll er auch für große Radbelastungen geeignet sein.

Das Problem wird mit den Merkmalen des Hauptanspruchs gelöst. Der Führungslenker hat einen aus zwei länglichen Tragprofilen gebildeten Lenkerkörper. Die Tragprofile sind gegenüber einer Mittelebene spiegelsymmetrisch gestaltet, die mittig zwischen den Tragprofilen und normal zu den Mittellinien von mindestens zwei der in den Tragprofilen vorhandenen Lagerbohrungen liegt. Sie haben im montierten Zustand in dem Bereich, in dem sie sich direkt berühren, einen zylindrischen Hohlraum, der konzentrisch zu einer Lagerbohrung angeordnet ist, wobei der Innendurchmesser des Hohlraums größer ist, als der Durchmesser der entsprechenden Lagerbohrung.

Für die spiegelsymmetrische Konstruktion muß nur ein Tragprofil entworfen werden. Das zweite Tragprofil ergibt sich aus der mathematischen Datensatzsiegelung. Auf die gleiche Weise vereinfacht sich die Konstruktion der Gußformen oder Schmiedegesenke.

Da der Lenkerkörper aus gegenüberliegenden Profilen besteht, können im Bereich zwischen den Tragprofilen problemlos Hohlräume oder Ausbrüche angeordnet werden, ohne daß aufwendige Schmiede- oder Gußformen entstehen.

Der Lenkerkörper ist mit einer Leiterkonstruktion vergleichbar. Hierbei sind die Tragprofile des Lenkerkörpers die Holmen der Leiter, während die Achsen bzw. die Verschraubungen der im Lagerkörper aufgenommenen Lagerstellen z.B. für den Radträger, einen Dämpfer, eine Fahrzeugfeder oder ein Federbein die Trittstufen bilden. Die Achsen bzw. die Verschraubungen sind gleichzeitig formversteifende und tragende Bestandteile des Führungslenkers, wodurch Befestigungselemente eingespart werden können.

Letzteres verringert neben dem Montageaufwand zusätzlich die gefederte Masse der Einzelradaufhängung, was sich positiv auf die Fahrdynamik auswirken kann.

Weitere Einzelheiten der Erfindung ergeben sich aus den nicht zitierten Unteransprüchen und der nachfolgenden Beschreibung einer schematisch dargestellten Ausführungsform:
- Figur 1:: Lagerkörper in dimetrischer Darstellung;
- Figur 2:: Führungslenkerabschnitt mit Radträger- und Dämpferankopplung;
- Figur 3:: Führungslenkerabschnitt mit der Anlenkung am Fahrzeugaufbau.
- Figur 4:: wie Figur 4, jedoch mit längerer Hülse.

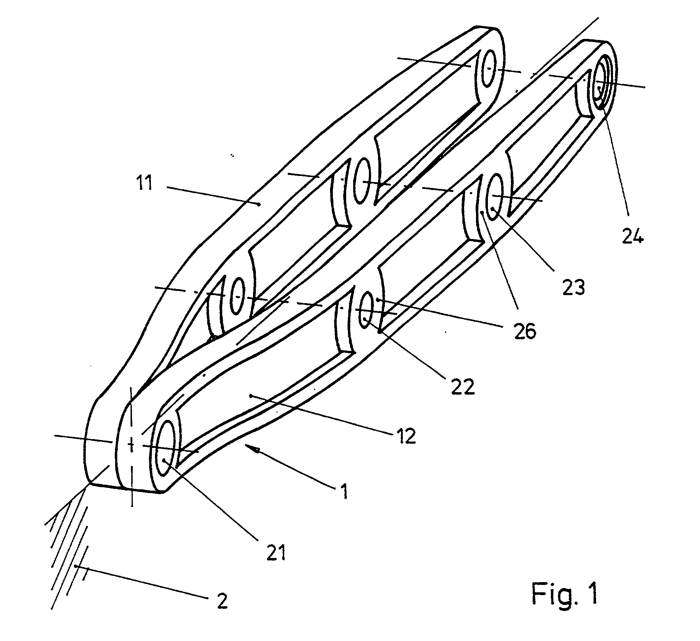

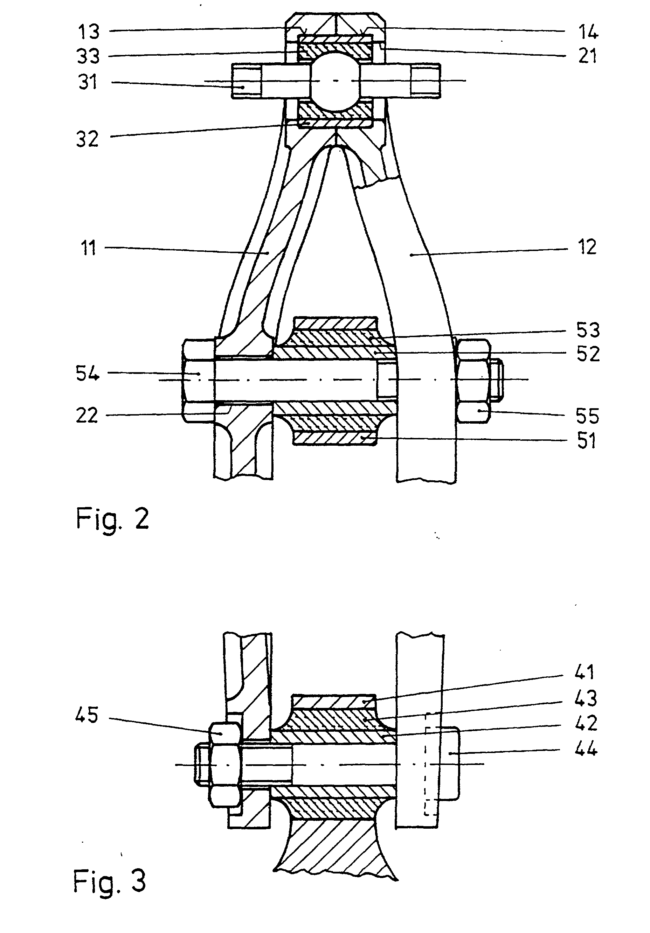

Die Figur 1 zeigt einen aus zwei Tragprofilen (11, 12) gebildeten Lenkerkörper (1) eines Führungslenkers. Der Lenkerkörper (1) verbindet als Teil einer Radaufhängung beispielsweise einen Radträger einer Einzelradaufhängung mit dem Fahrzeugaufbau. Dazu hat er die Lagerbohrungen (21) und (24), wobei er über die Anlenkbohrung (24) an der Karosserie schwenkbar befestigt ist, vgl. Figur 3, während er über die Radträgerlagerbohrung (21) den Radträger gelenkig lagert, vgl. Figur 2.

Zusätzlich nimmt der Lenkerkörper (1) beispielsweise die unteren Anlenkstellen eines Stoßdämpfers und einer Fahrzeugfeder in den Lagerbohrungen (22) und (23) auf. Die Figur 2 zeigt die Dämpferlagerung in der Dämpferlagerbohrung (22). Der Stoßdämpfer und die Federung sind nicht dargestellt.

Der Lenkerkörper (1) hat im Ausführungsbeispiel zwei zueinander spiegelsymmetrisch ausgeführte Tragprofile (11, 12). Die Symmetrieebene ist dabei eine zwischen den Tragprofilen (11, 12) liegende Mittelebene (2), die zudem normal bzw. senkrecht zu zumindest einem Teil der Mittellinien der Lagerbohrungen (21-24) ausgerichtet ist. Die Tragprofile haben beispielsweise über den größten Teil ihrer Baulänge ein I-förmiges Querschnittsprofil. Im Bereich der Lagerbohrungen (21-24) geht das I-Profil teilweise in ein Rechteckprofil über. Dort sind die Lagerbohrungen (21-24) durch rohr- bzw. ringförmige Materialanhäufungen (26) verstärkt.

Im Ausführungsbeispiel geht das I-Querschnittsprofil nach Figur 1 und 3 in Richtung auf die Anlenkbohrung (24) unter einer Verringerung der Profilbreite in ein C-Profil über. Die Profilöffnung ist dabei nach außen orientiert.

Im Bereich der Radträgerlagerbohrung (21) berühren sich die hier sichelförmig gebogenen Tragprofile (11, 12) direkt, während sie in den Bereichen der Lagerbohrungen (22-24) beispielsweise einen konstanten Abstand haben. Zwischen den Tragprofilen (11, 12) sind dort Gelenkteile der Federung, der Dämpfung und der fahrzeugaufbauseitigen Anlenkstelle angeordnet. Zu diesen Gelenkteilen können u.a. Hülsen (32, 42, 52) und Schrauben (44, 54) gehören, mit deren Hilfe die Tragprofile (11, 12) - auf Abstand gehalten - formsteif miteinander befestigt werden.

Die Mittellinien aller Lagerbohrungen (21-24) liegen nur beispielhaft parallel zueinander und in einer Ebene. Der Abstand zwischen den Tragprofilen ist über die Lenkerkörperlänge z.B. zur Anpassung an bestimmte Anlenkstellendimensionen und Belastungen beliebig variabel. Ferner ist die Querschnittsprofilhöhe und Profilwandstärke variabel. Ebenso kann der Lenkerkörper (1) zwischen den äußeren Lagerbohrungen (21, 24) gewölbt ausgeführt sein.

Als Material werden für die Tragprofile (11, 12) in der Regel hochfeste, schmiedbare Werkstoffe verwendet, die sich beispielsweise für winkel-, C- und I-förmige Querschnittsprofile eignen.

In Figur 2 ist das radseitige Ende des Lenkerkörpers (1) dargestellt. Die Enden der Tragprofile (11, 12) haben im Bereich der Radträgerlagerbohrung (21) jeweils eine von der in der Ebene (2) liegenden Trennfuge aus orientierte koaxiale Einsenkung (13, 14), die beide zusammen einen zylindrischen Innenraum bilden. In diesem Innenraum ist ein Schwenkgelenk - radial und axial fixiert - angeordnet. Das Schwenkgelenk besteht aus einem Schwenkgelenkkörper (31) mit Kugelabschnitt, einer Hülse (32) und einer zwischen diesen Teilen eingesetzten ein- oder mehrteiligen Elastomerkörperschale (33). Die Hülse (32), die maximal doppelt so lang ist, wie die Summe der beiden Einsenkungen (13, 14). Sie zentriert über die Einsenkungen (13, 14), in die sie jeweils halbseitig eingepreßt ist, die Tragprofile (11, 12) gegeneinander. Da die Radträgerbohrung (21) einen kleineren Durchmesser hat als die Einsenkungen (13, 14), ist das Schwenkgelenk auch ohne eigene Verschraubung formschlüssig fixiert.

Am Übergang zwischen dem gebogenen und dem geraden Abschnitt der Tragprofile (11, 12) befindet sich die Dämpferlagerbohrung (22), deren Ränder durch die Auflagenverstärkungen (26) verstärkt sind. In der Dämpferlagerbohrung (22) steckt eine Schraube (54), auf der eine Hülse (52) lagert. Die Hülse (52) kann bei einem kleinen Schwenkwinkelbedarf des Stoßdämpfers die Funktion einer Abstandshülse haben. Mit Hilfe der Schraube (54) und einer Mutter (55) werden in diesem Fall die Tragprofile (11, 12) starr miteinander verbunden. Die Hülse (52) steckt form- oder kraftschlüssig über einen Elastomerkörper gehalten in einem Dämpferstangenauge (51).

In Figur 3 ist das fahrzeugaufbauseitige Ende des Lenkerkörpers zu sehen. Auch hier werden die Tragprofile (11, 12) über eine Hülse (42) miteinander verschraubt. Ein die Hülse (42) umgebender Elastomerkörper (43) lagert in einem am Fahrzeugaufbau sitzenden Anlenkblock (41).

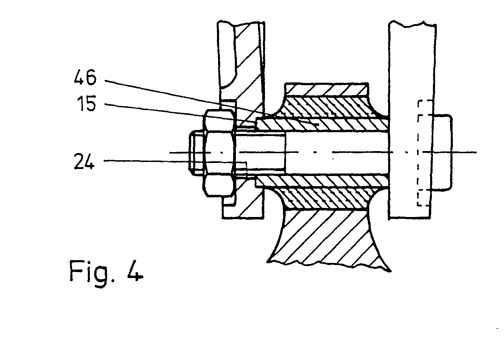

Die Figur 4 zeigt ebenfalls das fahrzeugaufbauseitige Ende des Lenkerkörpers. Auch hier werden die Tragprofile (11, 12) über eine Hülse (46) miteinander verschraubt. Die Hülse (46) ist im Vergleich zur Hülse (42) aus Figur 3 länger. Sie ragt mit ihren beiden Enden in Einsenkungen (15). Letztere sind beispielsweise konzentrisch zur Anlenkbohrung (24) angeordnet. Die Hülse (46) sitzt z.B. mit ihrer zylindrischen Außenkontur mittels eines Querpreßsitzes in den Einsenkungen (15), so daß sie die Tragprofile (11, 12) formschlüssig verbindet.

### Bezugszeichenliste

- 1: Führungslenker, Lenkerkörper
- 2: Mittelebene, Symmetrieebene

- 11, 12: Tragprofile
- 13, 14, 15: Einsenkungen, Hohlraum

- 21: Radträgerlagerbohrung, Lagerbohrung
- 22: Dämpferlagerbohrung, Lagerbohrung
- 23: Federlagerbohrung, Lagerbohrung
- 24: Anlenkbohrung, Lagerbohrung

- 26: Auflageverstärkungen, rohrförmig Material anhäufungen

- 31: Schwenkgelenkkörper, Radträgerseite
- 32: Hülse
- 33: Elastomerkörperschale

- 41: Anlenkblock am Fahrzeugaufbau
- 42: Hülse
- 43: Elastomerkörper
- 44: Schraube
- 45: Mutter
- 46: Hülse, lang

- 51: Dämpferstangenauge
- 52: Hülse
- 53: Elastomerkörper
- 54: Schraube
- 55: Mutter

## Patentansprüche

1. Führungslenker für Radaufhängungen von Kraftfahrzeugen, mit einem mindestens zweiteiligen Lenkerkörper, wobei der Lenkerkörper zwei längliche Tragprofile umfaßt, die über mindestens zwei Drittel ihrer Länge voneinander beabstandet parallel zueinander liegen und sich mindestens in der Umgebung einer Lagerbohrung des Lenkerkörpers kontaktieren,
- wobei die Tragprofile (11, 12) gegenüber einer Mittelebene (2) spiegelsymmetrisch gestaltet sind, die mittig zwischen den Tragprofilen (11, 12) und normal zu den Mittellinien von mindestens zwei Lagerbohrungen (21-24) liegt, **dadurch gekennzeichnet, daß**
- die Tragprofile (11, 12) im montierten Zustand in dem Bereich, in dem sie sich direkt berühren, einen zylindrischen Hohlraum (13, 14) haben, der konzentrisch zu einer Lagerbohrung (21) angeordnet ist, wobei der Innendurchmesser des Hohlraums (13, 14) größer ist, als der Durchmesser der entsprechenden Lagerbohrung (21).

2. Führungslenker gemäß Anspruch 1, **dadurch gekennzeichnet, daß** der Lenkerkörper (1) mindestens drei parallel zueinander ausgerichtete Lagerbohrungen (21-24) aufweist.

3. Führungslenker gemäß Anspruch 1, **dadurch gekennzeichnet, daß** die Tragprofile (11, 12) in den Bereichen von zumindest einem Teil der Lagerbohrungen (22-24) durch dort zumindest bereichs weise vorhandene Materialanhäufung (26) verstärkt ausgebildet sind.

4. Führungslenker gemäß Anspruch 1, **dadurch gekennzeichnet, daß** die Tragprofile (11, 12) zumindest über einen Teil ihrer Länge einen I-förmigen Querschnitt haben.

## Claims

1. A guide suspension link for the wheel suspension systems of motor vehicles with one at least two-part suspension link, said suspension link comprising two elongated supporting sections which run in parallel with one another a certain distance apart for at least two thirds of their length and which come into contact at least in the area of a bearing bore in the suspension link,
- the supporting sections (11, 12) being formed in such a manner that they are mirror symmetrical in relation to a centre plane (2) which lies in the centre of the supporting sections (11, 12) and normal to the centre lines of at least two bearing bores (21 to 24),
**characterised in that**
- when fitted, the supporting sections (11, 12) have in the area in which they are in direct contact a hollow cylindrical space (13, 14) which is positioned concentrically in relation to a bearing bore (21), the internal diameter of the hollow space (13, 14) being greater than the diameter of the corresponding bearing bore (21).

2. A guide suspension link in accordance with claim 1,
**characterised in that**
the suspension link (1) has at least three bearing bores (21 to 24) which are aligned in parallel with one another.

3. A guide suspension link in accordance with claim 1,
**characterised in that**
the supporting sections (11, 12) are reinforced in the areas of at least one part of the bearing bores (22 to 24) by means of material accumulation (26) in at least these areas.

4. A guide suspension link in accordance with claim 1,
**characterised in that**
the supporting sections (11, 12) have an I-shaped cross-section along at least a part of their length.

## Revendications

1. Bras de guidage pour des suspensions de roue de véhicule automobile, comportant un corps de bras au moins en deux pièces, le corps de bras comprenant deux profilés porteurs allongés qui se trouvent à distance parallèlement l'un à l'autre sur au moins deux tiers de leur longueur et qui se touchent au moins au voisinage d'un perçage de montage du corps de bras,
dans lequel
- les profilés porteurs (11, 12) sont réalisés symétriques par rapport à un plan médian (2) qui se trouve au milieu entre les profilés porteurs (11, 12) et perpendiculaire aux lignes médianes d'au moins deux perçages de montage (21 - 24),
**caractérisé en ce que** dans l'état monté les profilés porteurs (11, 12) possèdent une cavité cylindrique (13, 14) dans la zone dans laquelle ils se touchent directement, cavité qui est ménagée concentriquement à un perçage de montage (21), le diamètre intérieur de la cavité (13, 14) étant supérieur au diamètre du perçage de montage correspondant (21).

2. Bras de guidage selon la revendication 1, **caractérisé en ce que** le corps de bras (1) comprend au moins trois perçages de montage (21 - 24) orientés parallèlement les uns aux autres.

3. Bras de guidage selon la revendication 1, **caractérisé en ce que** les profilés porteurs (11, 12) sont réalisés renforcés dans les zones d'une partie au moins des perçages de montage (22 - 24) par une accumulation de matière (26) qui y est prévue au moins localement.

4. Bras de guidage selon la revendication 1, **caractérisé en ce que** les profilés porteurs (11, 12) ont une section en forme de I sur une partie au moins de leur longueur.
